# EUROPÄISCHE PATENTSCHRIFT

(11) **EP 2 642 862 B1**
(45) Veröffentlichungstag und Bekanntmachung des Hinweises auf die Patenterteilung: **07.01.2015**
(21) Anmeldenummer: 11794404.1
(22) Anmeldetag: 16.11.2011
(51) Int. Cl.: A23C 9/20, A23C 3/04, A23C 3/03

(54) **VERFAHREN UND VORRICHTUNG ZUM BEHANDELN VON MILCH**
METHOD AND APPARATUS FOR TREATING MILK
PROCÉDÉ ET DISPOSITIF DE TRAITEMENT DE LAIT

(30) Priorität: 22.11.2010 DE 102010060715
(43) Veröffentlichungstag der Anmeldung: 02.10.2013
(73) Patentinhaber: Förster, Martin, 78234 Engen (DE)
(72) Erfinder: Förster, Martin, 78234 Engen (DE)
(74) Vertreter: Weiss, Peter
(86) Internationale Anmeldenummer: PCT/EP2011/005772
(87) Internationale Veröffentlichungsnummer: WO 2012/069158

(56) Entgegenhaltungen:
- EP-A1- 1 538 396
- DE-C- 676 464
- DE-U1-202006 002 124
- GB-A- 326 156
- JP-A- 5 308 919
- JP-A- 9 173 032
- JP-A- 2009 170 334
- US-A1- 2005 132 892
- EASTRIDGE ET AL: "Major Advances in Applied Dairy Cattle Nutrition", JOURNAL OF DAIRY SCIENCE, AMERICAN DAIRY SCIENCE ASSOCIATION, US, Bd. 89, Nr. 4, 1. April 2006 (2006-04-01), Seiten 1311-1323, XP026956958, ISSN: 0022-0302 [gefunden am 2006-04-01]

## Beschreibung

Die Erfindung betrifft ein Verfahren zum Behandeln von Milch, insbesondere von Biestmilch, welche in gefrorenem Aggregatzustand in einem Behälter vorliegt.

### Stand der Technik

In DE 676 464 ist eine Düsenanordnung zum Tauen von angefrorener Milch beschrieben. Allgemein ist aus der EP 1 538 396 ein Ofen zum Garen von Lebensmitteln mit einem Gestell aus Röhrchen bekannt, die eine Vielzahl von seitlichen, teilweise in die gleiche Richtung weisenden Bohrungen aufweisen, welche als Austrittsöffnungen für in den Röhrchen geführten Heissdampf dienen.

Aus der DE 20 2006 002 124 U1 ist eine Anlage für die Zubereitung von Heissgetränken bekannt, die über zwei Dampfauslässe in der Form von Röhrchen gleicher Länge verfügt, welche in dieselbe Richtung weisen.

Aus der US 2005/132892 A1 ist eine Kaffeemaschine mit einer Dampfzufuhrleitung bzw. einem Röhrchen bekannt, welches mit einer Dampfauslassdüse endet, deren Spitze eine Vielzahl von Austrittsöffnungen aufweist, welche in die gleiche Richtung weisen. In der Leitung sind darüber hinaus zwei Dampfaustrittsbohrungen seitlich angeordnet.

Aus der JP 5 308 919 A ist eine Anlage für die Koagulation von Sojamilch bekannt, welche einen Rührer mit einer als Zuführleitung für Heissdampf fungierenden Achse und vier Rührblättern gleicher Länge in der Form von Röhrchen aufweist, wobei die Rührblätter mehrere nebeneinander liegende, seitliche Austrittsöffnungen für den Heissdampf aufweisen.

Aus der GB 326 156 A ist eine Anlage zur Behandlung eines flüssigen Lebensmittels, wie Milch mit Heissdampf bekannt. Die Anlage enthält Dampfzufuhrleitungen und der Dampfverteilung dienende, paarweise gleichlange Röhrchen, an denen Dampfauslassvorrichtungen befestigt sind, die teilweise in dieselbe Richtung weisen. Die Dampfauslässe sind derart gestaltet, dass sie eine Vielzahl von Dampfaustrittskanälen aufweisen, welche auf der Austrittsseite der Auslässe kreisförmig angeordnet sind.

Insbesondere bei der Tränke von Kälbern wird häufig Milch verwendet, die vorab zur Lagerung gekühlt und sogar gefroren wird. Die vorliegende Erfindung bezieht sich vor allem, jedoch nicht ausschliesslich, auf Biestmilch. Biestmilch ist eine von der Mutterkuh stammende Erstmilch, die besonders reich an Vitaminen, Mineralien usw. aber auch an Keimen ist und zur Stärkung des Immunsystems eines Jungtiers verfüttert werden kann. Zur Abtötung der Keime sind beispielsweise Pasteurisierungseinrichtungen bekannt, wie sie in der WO 2004/089069 A1 beschrieben sind. Damit die pasteurisierte Milch nicht wieder verstärkt mit Keimen versetzt wird, muss sie in entsprechenden Vorratsbehältern auf eine keimwachstumshemmende Temperatur abgekühlt werden. Dies hat allerdings den weiteren Nachteil, dass, wenn ein Tier mit Futteranspruch mit der pasteurisierten, aber gekühlten Milch gefüttert werden soll, diese wieder auf eine entsprechende Tränketemperatur aufgewärmt und Energie zum Erwärmen der abgekühlten Milch verwendet werden muss.

Aus der Veröffentlichung Eastridge et.al.: "Major Advances in Appied Dairy Cattel Nurtrition", Journal of Dairy Science, American Diary Science Association, US, Bd. 89, Nr. 4, 1. April 2006, Seiten 1311-1323 wird ein Auftauen von Biestmilch in einem Mikrowellenofen bzw. in warmem Wasser beschrieben.

### Aufgabe

Aufgabe der vorliegenden Erfindung ist es, eine möglichst kostengünstige Lagerhaltung für die Milch aufzuzeigen und das Zurverfügungstellen zur Fütterung zu erleichtern.

### Lösung der Aufgabe

Zur Lösung der Aufgabe führt, dass zum Auftauen der Milch in die Milch Dampf eingeblasen wird.

Dabei kann es sein, dass die Milch in dem Behälter als Flüssigkeit eingefroren wurde und so auch wieder aufgetaut werden soll. Denkbar ist aber auch, dass die Milch in Würfel oder anderen Stückformen eingefroren wird, die dann zum Auftauen in einen Behälter gegeben werden. Der Dampf kann dann leichter und schneller zwischen die einzelnen Stücke gelangen, wodurch das Auftauen beschleunigt wird. Ähnliches wird auch dadurch erreicht, wenn die Milch vor Eingabe in den Behälter gecrasht wird.

In einem bevorzugten Ausführungsbeispiel soll der Dampf an mehreren Stellen in die gefrorene Milch eingeblasen werden. Dies hat den Vorteil, dass die gefrorene Milch gleichzeitig in mehreren Bereichen erwärmt wird, was dazu führt, dass auch der Dampf relativ schnell in diesen Bereich wieder herunter gekühlt wird, sodass es nicht zu einer Überhitzung kommt, wodurch die wertvollen γ-Globuline aber auch andere Vitamine beziehungsweise Mineralien zerstört würden.

Das Einblasen von Dampf kann durch entsprechende Öffnungen in dem Behälter selbst, vor allem im Behälterboden, oder durch in den Behälter einführbare Einrichtungen geschehen. In einem bevorzugten Ausführungsbeispiel ist die Vorrichtung selbst relativ einfach aufgebaut. Sie weist zumindest einen, bevorzugt eine Mehrzahl von Hohlkörpern in Form von dünnen Röhrchen auf, die es erlauben, dass sie leicht in die gefrorene Milch eingeführt werden können. Der Dampf tritt stirnseitig aber auch bevorzugt aus seitlichen Auslassöffnungen aus dem Röhrchen aus, so dass dieses allein durch sein Eigengewicht in die Milch einsinken kann.

Diese Röhrchen haben natürlich den Vorteil, dass die Milch um die Röhrchen herum ebenfalls relativ schnell von einem gefrorenen Aggregatzustand in einen flüssigen Aggregatzustand übergeführt wird.

Eine Mehrzahl von derartigen Röhrchen ist zu einer Dampflanze zusammengefasst und über einen gemeinsamen Hohlschaft mit einer Quelle für Dampf verbunden. Die Röhrchen selbst können beispielsweise einen Innendurchmesser von bis zu 3 mm aufweisen und besitzen bevorzugt eine gleiche Längen. Denkbar sind auch unterschiedliche Längen, so dass sie in unterschiedliche Bereiche der gefrorenen Milch vordringen.

Seitliche Auslassöffnungen in den Röhrchen haben den Vorteil, dass nicht nur unterschiedliche Höhenschichten der Milch gleichzeitig aufgetaut werden, sondern es besteht auch die Möglichkeit, durch eine tangentiale Anordnung der Auslassöffnungen eine die Röhrchen aufweisende Dampflanze allein durch den Dampfdruck in Drehbewegung zu versetzen, hierdurch kommt es zu einer schnelleren Erwärmung der gefrorenen Eisteile beziehungsweise der bereits aufgewärmten Milch.

Vorteilhafterweise sind an den Hohlkörpern und/oder der die Hohlkörper zusammenfassenden Dampflanze und/oder dem Behälter Temperatursensoren vorgesehen, mit denen kontrolliert wird, dass die Milch eine Temperatur von ca. 38° bis 42°C aufweist. Um dies zu Erzielen, kann auch noch eine äussere Zusatzheizung vorgesehen werden.

### Figurenbeschreibung

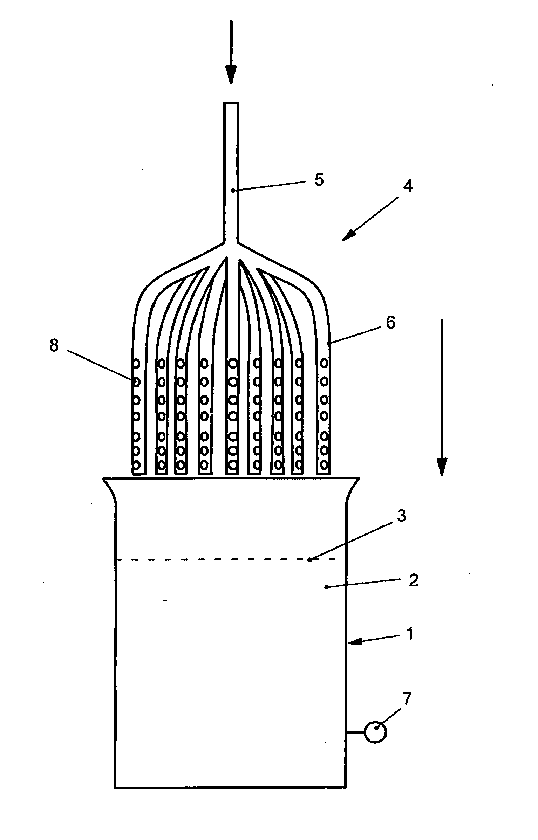

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in ihrer einzigen Figur eine Seitenansicht einer erfindungsgemässen Vorrichtung zum Behandeln von Milch.

Hierzu befindet sich in einem Topf 1 gefrorene Biestmilch 2, deren Oberfläche 3 gestrichelt angedeutet ist.

Diesem Topf 1 wird eine Dampflanze 4 zugeordnet, welche über einen Hohlschaft 5 an einer nicht näher gezeigten Dampfquelle angeschlossen ist. Von diesem Hohlschaft 5 ragt eine Mehrzahl von Hohlkörpern 6 ab. Diese Hohlkörper 6 sind als Röhrchen ausgebildet und weisen eine im wesentlichen gleiche Länge auf. In die Röhrchen sind über Länge verteilt Auslassöffnungen 8 eingeformt.

Die Funktionsweise der vorliegenden Erfindung ist folgende:

Soweit die in dem Topf 1 vorhandene Biestmilch 2 benötigt wird, wird der Topf 1 aus einer entsprechenden Kühleinrichtung genommen. Nunmehr wird die Dampflanze 4 in die gefrorene Biestmilch 2 eingebracht, wobei die Hohlkörper 6 in die gefrorene Biestmilch 2 eindringen. Auf diese Weise entstehen in verschiedenen Höhen und an verschiedenen radial verteilten Stellen in der Biestmilch 2 Bereiche, die mit Dampf beaufschlagt werden. Auch die Röhrchen selbst geben Wärme ab, sodass die Biestmilch relativ schnell und ohne zu überhitzen aufgetaut und erwärmt wird. Gleichzeitig werden aber die Röhrchen und auch der Dampf herunter gekühlt, sodass es zu keiner Zerstörung der γ-Globuline kommt.

Dem Topf 1 bzw. der darin beinhalteten Biestmilch 2 wird ferner ein Temperatursensor 7 zugeordnet, über den die Zufuhr des Dampfes gesteuert wird.

**Bezugszeichenliste**

| | | | | | |
|---|---|---|---|---|---|
| 1 | Topf | 34 | | 67 | |
| 2 | Biestmilch | 35 | | 68 | |
| 3 | Oberfläche | 36 | | 69 | |
| 4 | Dampflanze | 37 | | 70 | |
| 5 | Hohlschaft | 38 | | 71 | |
| 6 | Hohlkörper | 39 | | 72 | |
| 7 | Temperatursensor | 40 | | 73 | |
| 8 | Auslassöffnung | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Behandeln von Milch, insbesondere von Biestmilch (2), welche im gefrorenen Aggregatzustand in einem Behälter (1) vorliegt,
**dadurch gekennzeichnet,**
**dass** zum Auftauen der Milch in die Milch Dampf eingeblasen wird.

2. Verfahren nach Anspruch 1, **dadurch gekennzeichnet, dass** zum Auftauen der Milch in den Behälter durch Düsen oder Öffnungen vom Behälterboden her Dampf eingeblasen wird.

3. Verfahren nach Anspruch 1 oder 2, **dadurch gekennzeichnet, dass** der Dampf gleichzeitig an mehreren Stellen in die gefrorene Milch eingeblasen wird.

4. Verfahren nach wenigstens einem der Ansprüche 1 bis 3, **dadurch gekennzeichnet, dass** die gefrorene Milch in Stücken vorliegt.

5. Verfahren nach wenigstens einem der Ansprüche 1 bis 4, **dadurch gekennzeichnet, dass** die Milch mechanisch zerkleinert wird.

6. Verfahren nach wenigstens einem der Ansprüche 1 bis 5, **dadurch gekennzeichnet, dass** der Dampf durch Hohlkörper (6) in die Milch eingeblasen wird.

7. Verfahren nach Anspruch 6, **dadurch gekennzeichnet, dass** die Hohlkörper (6) durch ihr Eigengewicht in die aufgetaute Milch einsinken.

8. Verfahren nach Anspruch 6 oder 7, **dadurch gekennzeichnet, dass** die Hohlkörper (6) durch das Einbringen von Dampf in Drehbewegung um eine Behälterachse versetzt werden.

9. Verfahren nach wenigstens einem der vorhergehenden Ansprüche **dadurch gekennzeichnet, dass** der Dampf durch zumindest ein Röhrchen (6) in die Milch eingeblasen wird.

10. Verfahren nach Anspruch 9, **dadurch gekennzeichnet, dass** der Dampf aus zumindest eine seitliche Auslassöffnung (8) des Röhrchens (6) ausgeblasen wird.

11. Verfahren nach Anspruch 9 oder 10, **dadurch gekennzeichnet, dass** der Dampf aus einer Mehrzahl von Röhrchen ausgeblasen wird, die zumindest teilweise gleiche Längen aufweisen.

## Claims

1. A method of treating milk, in particular colostrum (2), present in a container (1) in the frozen physical state, **characterized in that** steam is blown into the milk to thaw the milk.

2. A method according to claim 1, **characterized in that** steam is blown into the container from the container base through nozzles or openings in order to thaw the milk.

3. A method according to claim 1 or 2, **characterized in that** the steam is blown into the frozen milk at a plurality of sites simultaneously.

4. A method according to at least one of claims 1 to 3, **characterized in that** the frozen milk is present in pieces.

5. A method according to at least one of claims 1 to 4, **characterized in that** the milk is mechanically crushed.

6. A method according to at least one of claims 1 to 5, **characterized in that** the steam is blown into the milk through hollow bodies (6).

7. A method according to claim 6, **characterized in that** the hollow bodies (6) sink into the thawed milk through their own weight.

8. A method according to claim 6 or 7, **characterized in that** the hollow bodies (6) are set in rotary motion about a container axis through the introduction of steam.

9. A method according to at least one of the preceding claims, **characterized in that** the steam is blown into the milk through at least one tube (6).

10. A method according to claim 9, **characterized in that** the steam is blown out of at least one lateral outlet (8) of the tube (6).

11. A method according to claim 9 or 10, **characterized in that** the steam is blown out of a plurality of tubes at least some of which have the same length.

## Revendications

1. Procédé de traitement de lait, en particulier de colostrum (2), qui est présent à l'état d'agrégation congelé dans un récipient (1),
**caractérisé par le fait**
**que** pour décongeler le lait, de la vapeur d'eau est introduite par soufflage dans le lait.

2. Procédé selon la revendication 1, **caractérisé par le fait que** pour la décongélation du lait dans le réservoir, de la vapeur est introduite par soufflage à travers de buses ou d'ouvertures depuis le fond du récipient.

3. Procédé selon la revendication 1 ou 2, **caractérisé par le fait que** la vapeur est introduite par soufflage dans le lait congelé, simultanément en plusieurs endroits.

4. Procédé selon au moins l'une des revendications 1 à 3, **caractérisé par le fait que** le lait congelé est présent en morceaux.

5. Procédé selon au moins l'une des revendications 1 à 4, **caractérisé par le fait que** le lait est broyé mécaniquement.

6. Procédé selon au moins l'une des revendications 1 à 5, **caractérisé par le fait que** la vapeur est introduite dans le lait par soufflage à travers de corps creux (6).

7. Procédé selon la revendication 6, **caractérisé par le fait que** les corps creux (6) descendent sous leur propre poids dans le lait décongelé.

8. Procédé selon la revendication 6 ou 7, **caractérisé par le fait que** les corps creux (6) sont déplacés par l'introduction de vapeur selon un mouvement de rotation autour de l'axe du récipient.

9. Procédé selon au moins l'une des revendications précédentes, **caractérisé par le fait que** la vapeur est introduite dans le lait par soufflage à travers au moins un tube (6).

10. Procédé selon la revendication 9, **caractérisé par le fait que** la vapeur est sortie par soufflage à travers au moins une ouverture de sortie latérale (8) du tube (6).

11. Procédé selon la revendication 9 ou 10, **caractérisé par le fait que** la vapeur est sortie par soufflage par une pluralité de tubes présentant au moins partiellement des longueurs identiques.
